# EUROPÄISCHE PATENTSCHRIFT

(11) **EP 1 813 961 B1**
(45) Veröffentlichungstag und Bekanntmachung des Hinweises auf die Patenterteilung: **02.09.2009**
(21) Anmeldenummer: 06025791.2
(22) Anmeldetag: 13.12.2006
(51) Int. Cl.: G01S 17/02, G01S 7/481, G01S 7/497

(54) **Vorrichtung zur optoelektronischen Überwachung von Objekten**
Device for optoelectronic monitoring of objects
Dispositif destiné à la surveillance optoélectronique d'objets

(30) Priorität: 27.01.2006 DE 102006004193
(43) Veröffentlichungstag der Anmeldung: 01.08.2007
(73) Patentinhaber: SICK AG, 79183 Waldkirch (DE)
(72) Erfinder: Wüstefeld, Martin, 79350 Sexau (DE)
(74) Vertreter: Patentanwälte Westphal, Mussgnug & Partner

(56) Entgegenhaltungen:
- EP-A2- 1 418 089
- DE-A1- 19 652 440
- DE-U1- 9 321 155
- DE-U1- 29 911 390
- US-A1- 2005 200 840

## Beschreibung

Die Erfindung betrifft eine Vorrichtung zur optoelektronischen Überwachung von Objekten gemäß dem Patentanspruch 1.

Optoelektronische Überwachungen werden in vielen Bereichen insbesondere zu Sicherheits- und Kontrollzwecken eingesetzt. Beispielsweise können Raumbereiche auf das Vorhandensein von Personen oder Gegenständen überwacht werden, z.B. zur Sicherung von Eingangsbereichen, zur Sicherung von gefährlichen Maschinen. Ebenso können Objekte kontrolliert werden, um ein Entfernen oder Bewegen dieser Objekte zu überwachen.

Es sind Vorrichtungen zur optoelektronischen Überwachung bekannt, die nach dem Scanner-Prinzip arbeiten (z.B. DE 43 45 446 C2). Bei diesen Vorrichtungen überstreicht ein kollimierter Beleuchtungsstrahl den zu überwachenden Bereich und die von dem zu überwachenden Objekt diffus gestreuter Strahlung wird durch eine Empfangseinheit überwacht. Bei diesen Vorrichtungen werden rotierende optische Systeme verwendet, die einen hohen mechanischen Herstellungs- und Justageaufwand erforderlich machen. Auch die Lebensdauer solcher mechanisch rotierender Systeme ist begrenzt.

Weiter sind Vorrichtungen zur optoelektronischen Überwachung gemäß dem Gattungsbegriff bekannt (z.B. DE 299 11 390 U1), bei welchen eine Sendeeinheit Beleuchtungsstrahlen in einem strukturierten Beleuchtungsmuster aussendet und das mit diesem Beleuchtungsmuster beleuchtete Objekt in einem Bildgeber einer Empfangseinheit abgebildet und überwacht wird.

Die bekannten Vorrichtungen können sowohl zur Überwachung von Objekten als auch zur Überwachung von Raumbereichen eingesetzt werden. Bei der Überwachung von Objekten wird das Vorhandensein des Objektes überwacht, während bei der Überwachung von Raumbereichen das Auftreten eines Objektes in dem überwachten Raumbereich detektiert wird. Der Ausdruck "Überwachung von Objekten" soll beide Anwendungsmöglichkeiten umfassen.

Ein kompakter Aufbau und eine einfache Installation der Vorrichtung ergibt sich, wenn die Sendeeinheit und die Empfangseinheit in einem gemeinsamen Gehäuse angeordnet sind. Das Gehäuse wird durch eine Frontscheibe abgedeckt, durch welche die Beleuchtungsstrahlen austreten und durch welche die Empfangseinheit das vom Objekt kommende Licht empfängt. Bei einer Verschmutzung der Frontscheibe werden die ausgesandten Beleuchtungsstrahlen und das von dem beleuchteten Objekt kommende empfangene Licht geschwächt, wodurch die Funktion der Vorrichtung gestört werden kann. Ebenso ist eine Manipulation der Überwachung möglich, indem die Frontscheibe mehr oder weniger stark abgedeckt wird.

Bei der Vorrichtung gemäß DE 43 45 446 C2 wird eine Verschmutzung der Frontscheibe dadurch überwacht, dass ein Lichtstrahl einer zusätzlichen Lichtquelle durch einen Bereich der Frontscheibe geschickt wird und durch einen zusätzlichen Empfänger die Intensität des durchtretenden Lichtstrahls gemessen wird. Die Überprüfung der Verschmutzung erfordert ein zusätzliches optisches System von Sender und Empfänger. Die Überwachung der Verschmutzung erfolgt außerdem nicht in dem gesamten Bereich der Frontscheibe, der für die Strahlung zur Objektüberwachung benutzt wird.

Als weiterer Stand der Technik wird die EP 1 418 089 A2 genannt.

Der Erfindung liegt die Aufgabe zu Grunde, eine Vorrichtung zur optoelektronischen Überwachung von Objekten zur Verfügung zu stellen, die bei einfachem und robustem Aufbau eine kontinuierliche Funktionskontrolle ermöglicht.

Diese Aufgabe wird erfindungsgemäß gelöst durch eine Vorrichtung mit den Merkmalen des Patentanspruchs 1.

Vorteilhafte Ausführungen und Weiterbildungen der Erfindung sind in den Unteransprüchen angegeben.

Die erfindungsgemäße Vorrichtung verwendet das Prinzip der strukturierten Beleuchtung. Eine Sendeeinheit sendet Beleuchtungsstrahlen in einem strukturierten Beleuchtungsmuster aus und beleuchtet das zu überwachende Objekt mit diesem strukturierten Beleuchtungsmuster. Das strukturierte Beleuchtungsmuster kann eindimensional oder zweidimensional ausgebildet sein, es kann aus diskreten Beleuchtungspunkten oder einem kontinuierlich ausgeleuchtetem Muster bestehen, im einfachsten Fall kann es sich um eine linienförmige Beleuchtung handeln. Das Objekt wird mit einer Empfangseinheit beobachtet, die das Beleuchtungsmuster des Objekts empfängt und auf einem Bildgeber abbildet. Die Empfangseinheit kann insbesondere eine digitale Kamera sein. Das auf dem Bildgeber empfangene Bildmuster wird entsprechend der geometrischen Gegebenheiten ausgewertet. Z.B. durch Anwendung der Triangulation kann aus dem Bildmuster eindeutig bestimmt werden, ob sich das überwachte Objekt in dem überwachten Raumbereich befindet, sich bewegt hat oder entfernt wird oder ob ein unerwünschtes Objekt in den überwachten Raumbereich gelangt.

Die Sendeeinheit, die Empfangseinheit und die Frontscheibe sind so in dem gemeinsamen Gehäuse der Vorrichtung angeordnet, dass von der Sendeeinheit ausgesandte Beleuchtungsstrahlen, die direkt reflektiert werden, nicht in die Empfangseinheit gelangen. Werden Strahlen der Sendeeinheit jedoch an der Frontscheibe diffus gestreut, so sieht die Empfangseinheit das Streulicht an der Frontscheibe getrennt von dem vom Objekt kommenden Licht. Bei der Auswertung der Empfangseinheit kann daher festgestellt werden, ob eine diffuse Streuung der von der Sendeeinheit ausgesandten Beleuchtungsstrahlen an der Frontscheibe auftritt. Das Auftreten von diffuser Streuung an der Frontscheibe ist ein Hinweis auf eine an der Frontscheibe abgelagerte Verschmutzung. Ebenso kann eine diffuse Streuung an der Frontscheibe dadurch verursacht werden, dass die Frontscheibe zum Zwecke einer Manipulation abgedeckt wird. Der Ausdruck "diffuse Streuung an der Frontscheibe" soll beide Fälle umfassen, d. h. eine Streuung an einer unmittelbar an der Frontscheibe abgelagerten Verschmutzung und ebenso eine Streuung an einer vor die Frontscheibe gebrachten Abdeckung.

Da der Bereich, in welchem die von der Sendeeinheit ausgesandten Beleuchtungsstrahlen auf die Frontscheibe treffen, für die Empfangseinheit unter einem anderen Sichtwinkel liegen als der zu überwachende Raumbereich, können vorzugsweise die an der Frontscheibe gestreuten Beleuchtungsstrahlen auf einem Bildgeber der Empfangseinheit von der Abbildung des zu überwachenden Bereiches getrennt abgebildet werden.

In einer bevorzugten Ausführung, die sich durch einen besonders einfachen Aufbau auszeichnet, sind die Beleuchtungsstrahlen in einer Abtastebene fächerförmig aufgespreizte Einzelstrahlen. Das Objekt wird dadurch in dieser Abtastebene durch eine in einer Linie angeordnete Punkte beleuchtet. Dementsprechend stellt sich die Abbildung des Objektes auf dem Bildgeber als eine Reihe von linear angeordneten Abbildungspunkten dar.

Die Empfangseinheit ist gegenüber dieser Abtastebene versetzt angeordnet, so dass die Empfangseinheit das von dem Objekt kommende Licht unter einem gegen die Abtastebene geneigten Sichtwinkel empfängt. Das gegebenenfalls von einer diffusen Streuung an der Frontscheibe kommende Licht wird dagegen unter einem anderen Sichtwinkel empfangen und auf dem Bildgeber als eine Reihe von Bildpunkten abgebildet, die gegen die Reihe der Abbildungspunkte des Objektes parallel versetzt ist. Dadurch ergibt sich eine einfache und zuverlässige Signalverarbeitung für die Auswertung des Bildgebers. Die Sendeeinheit kann in besonders einfacher Ausführung eine Lichtquelle mit Strahlbündelung und ein diffraktives optisches Element aufweisen. Die Lichtquelle kann eine punktförmige Lichtquelle, z. B. eine Laserdiode mit nachgeschalteter Kollimatorlinse sein. Das diffraktive optische Element spaltet den gebündelten Lichtstrahl der Lichtquelle in einen Fächer von Einzelstrahlen auf.

Die Empfangseinheit weist insbesondere eine Empfangsoptik auf, die das Bild des Objektes auf den Bildgeber abbildet. Der Bildgeber ist vorzugsweise als digitale Kamera mit in einer Matrix angeordneten fotoelektrischen Elementen ausgebildet, z.B. Fotodioden, CCD oder CID.

Bei der erfindungsgemäßen Vorrichtung werden die von der Sendeeinheit zur Überwachung des Objektes ausgesendeten Beleuchtungsstrahlen und die zur Überwachung des Objekts verwendete Empfangseinheit gleichzeitig auch zur Überwachung einer Verschmutzung oder Manipulation der Frontscheibe verwendet. Diese Überwachung auf Verschmutzung oder Manipulation führt somit zu keinen zusätzlichen Herstellungskosten der Vorrichtung. Die Überwachung auf Verschmutzung oder Manipulation ist insbesonders zuverlässig, da genau derselbe Bereich der Frontscheibe überwacht wird, durch welchen das Licht für die Objektüberwachung durchtritt.

In einer Weiterbildung der Erfindung kann in einfacher Weise und ohne zusätzlichen Aufwand auch die Funktion der Vorrichtung überprüft und kontrolliert werden. Hierzu wird ein Teilstrahl der Sendeeinheit so abgelenkt, dass er nicht zur Abtastung des zu überwachenden Objektes verwendet wird, sondern auf eine außerhalb des Abtastbereichs liegende Stelle der Frontscheibe auftrifft. Diese Stelle ist diffus aufstreuend ausgebildet, wozu z. B. ein diffus aufstreuendes Element auf die Frontscheibe aufgebracht wird oder die ansonsten transparente Frontscheibe mattiert wird. Der auf diese Stelle auftreffende Teilstrahl wird stets diffus aufgestreut und entsprechend in einem bestimmten Kontrollbildpunkt der Empfangseinheit, vorzugsweise auf dem Bildgeber abgebildet. Solange sich dieser Kontrollbildpunkt auf dem Bildgeber an der vorgeschriebenen Stelle und mit der vorgeschriebenen Intensität befindet, zeigt dies an, dass die Sendeeinheit und die Empfangseinheit einwandfrei funktionieren und dass auch die Frontscheibe in der vorgeschriebenen Lage montiert ist.

Falls eine noch weiter verbesserte Fehlersicherheit der Vorrichtung angestrebt wird, kann zusätzlich auch noch kontrolliert werden, ob sämtliche Pixel des Bildgebers einwandfrei arbeiten. Hierzu wird in einer Weiterbildung der Erfindung der gesamte Bildgeber mittels einer Blendungslichtquelle, z. B. einer Leuchtdiode ausgeleuchtet. Es kann bei dieser vollständigen Ausleuchtung des Bildgebers überprüft werden, ob jedes Pixel bzw. jede Pixelgruppe ein entsprechendes Signal liefert. Diese Prüfung durch volle Ausleuchtung des Bildgebers kann allerdings nicht kontinuierlich während des Betriebs mitlaufen, da die Objektüberwachung bei einer solchen vollständigen Ausleuchtung nicht funktionsfähig ist.

Zur Überwachung der Funktionsfähigkeit ist es nicht notwendig, dass der Bildgeber der Empfangseinheit auch für die Verschmutzungsüberwachung verwendet wird. Es kann in der Empfangseinheit hierzu auch ein zusätzliches von dem Bildgeber getrenntes Empfangselement, z. B. eine Fotodiode verwendet werden. Dabei sind verschiedene Varianten möglich. Das zusätzliche Empfangselement kann in der oben beschriebenen Weise das infolge von Verschmutzung oder Manipulation diffus an der Frontscheibe gestreute Licht der Beleuchtungsstrahlen empfangen. Wird eine Blendungslichtquelle verwendet, so kann auch das diffuse Streulicht dieser Blendungslichtquelle zur Überwachung der Verschmutzung verwendet werden. Dies kann den Vorteil haben, dass nicht ein Beleuchtungsstrahl des strukturierten Beleuchtungsmusters verwendet werden muss, das komplette Beleuchtungsmuster daher für die Objektüberwachung verwendet werden kann. Je nach der Anzahl und dem Winkelabstand der Beleuchtungsstrahlen und den Dimensionen des Gehäuses ergibt sich unter Umständen auch noch keine ausreichende Trennung der Beleuchtungsstrahlen an der Frontscheibe, um einen dieser Beleuchtungsstrahlen separat zur Funktionskontrolle zu verwenden.

Weist die Empfangseinheit ein separates vom Bildgeber getrenntes Empfangselement auf, so kann auch die direkte Reflexion des Lichtes der Sendeeinheit an der Frontscheibe mit diesem Empfangselement überwacht werden. Der direkte Reflex der Strahlen der Sendeeinheit weist bei ungestörter Funktion eine konstante Lichtintensität auf. Bei Verschmutzung oder Manipulation der Frontscheibe kommt zu der Intensität des direkten Lichtreflexes diffuses Streulicht hinzu, so dass die Lichtintensität zunimmt. Bei einer Funktionsstörung der Sendeeinheit nimmt dagegen die Intensität des direkt reflektierten Lichtes ab. Es kann somit durch den Empfang und die Verarbeitung des direkten Reflexes sowohl eine Überwachung auf Verschmutzung und Manipulation als auch eine Kontrolle der Funktion der Sendeeinheit durchgeführt werden.

Im Folgenden wird die Erfindung anhand von in der Zeichnung dargestellten Ausführungsbeispielen näher erläutert. Es zeigen
- Fig. 1: eine erste Ausführung der Vorrichtung im ungestörten Betrieb,
- Fig. 2: diese Ausführung bei Verschmutzung der Frontscheibe,
- Fig. 3: diese Ausführung bei einer Manipulation,
- Fig. 4: eine zweite Ausführung mit Kontrolle der Sendeeinheit,
- Fig. 5: eine dritte Ausführung mit Kontrolle des Bildgebers und
- Fig. 6: eine Abwandlung dieser dritten Ausführung.

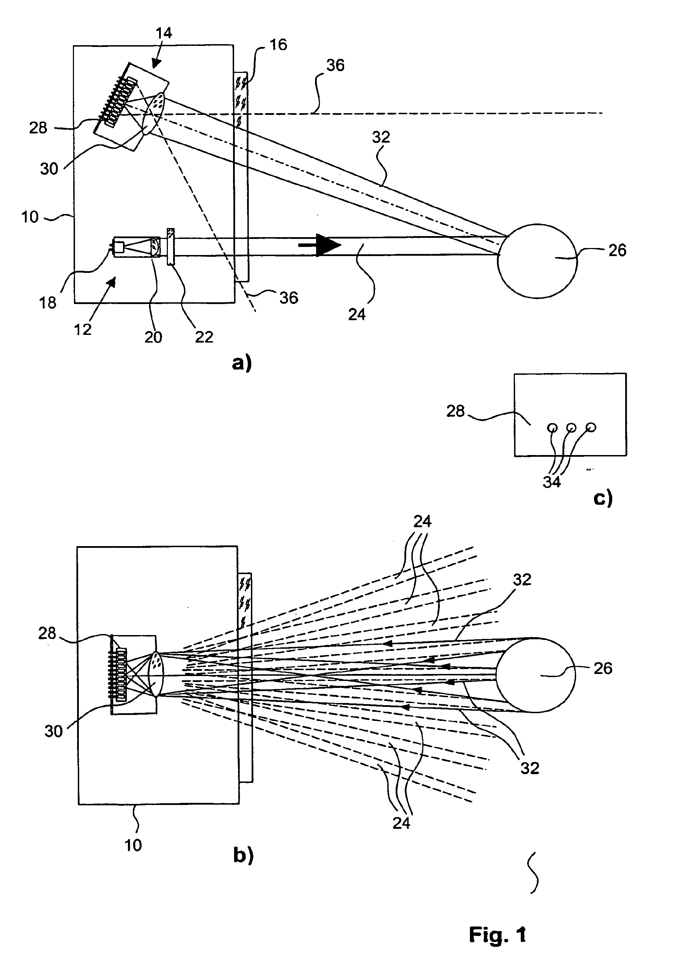

In den Figuren 1 bis 6 ist jeweils mit a eine Seitenansicht, mit b eine Draufsicht und mit c das Bildgeber-Bild bezeichnet.

Die in der Zeichnung nur schematisch dargestellte Vorrichtung weist ein Gehäuse 10 auf, in welchem eine Sendeeinheit 12 und eine Empfangseinheit 14 angeordnet sind. Das Gehäuse 10 ist durch eine transparente vollständig lichtdurchlässige Frontscheibe 16 abgeschlossen.

Die Sendeeinheit 12 weist insbesondere eine Lichtquelle 18, z. B. eine Laserdiode auf, deren Licht mittels einer optischen Strahlbündelung 20 kollimiert wird. Der kollimierte Lichtstrahl wird mittels eines diffraktiven optischen Elements 22 aufgefächert. Dadurch werden Beleuchtungsstrahlen 24 in einem strukturierten Muster erzeugt, die durch die Frontscheibe 16 austreten. In dem dargestellten Ausführungsbeispiel besteht das strukturierte Beleuchtungsmuster aus in einer Ebene fächerartig aufgespreizten Beleuchtungsstrahlen 24. Die Beleuchtungsstrahlen 24 treffen auf ein zu überwachendes Objekt 26, das durch die Beleuchtungsstrahlen 24 in diesem strukturierten Beleuchtungsmuster beleuchtet wird.

Die Empfangseinheit 14 weist einen Bildgeber 28, auf welchen mittels einer Empfangsoptik 30 das Beleuchtungsmuster des Objektes 26 abgebildet wird. Die Empfangseinheit 14 ist vorzugsweise als digitale Kamera mit einer Pixel-Matrix-Anordnung von fotoelektrischen Elementen ausgebildet.

Die Sendeeinheit 12 und die Empfangseinheit 14 sind in dem Gehäuse 10 gegeneinander versetzt in der Weise angeordnet, dass sich zwischen Sendeeinheit 12, Empfangseinheit 14 und Objekt 26 eine sogenannte Triangulationsanordnung ergibt. Bei dieser Anordnung trifft direkt an der Frontscheibe 16 oder dem Objekt 26 reflektiertes Licht der Sendeeinheit 12 nicht die Empfangseinheit 14. Die Empfangseinheit 14 empfängt somit nur das diffus an dem Objekt 26 gestreute Licht des Beleuchtungsmusters.

In Figur 1 ist die Funktion der Vorrichtung im störungsfreien Betrieb dargestellt. die Sendeeinheit 12 sendet strukturiert aufgefächerte Beleuchtungsstrahlen 24 aus. Diese Beleuchtungsstrahlen 24 treten ungeschwächt durch die Frontscheibe 16 aus und treffen teilweise auf das zu überwachende Objekt 26, welches in dem charakteristischen Beleuchtungsmuster der strukturierten Beleuchtungsstrahlen, z. B. in einer Linie von Beleuchtungspunkten beleuchtet wird. Das diffus an diesen Beleuchtungspunkten gestreute Objektlicht 32 tritt durch die Frontscheibe 16 und wird in der Empfangseinheit 14 auf dem Bildgeber 28 abgebildet. Wie die Darstellung in Figur 1c zeigt, ergeben sich somit auf dem Bildgeber 28 beispielsweise drei Objekt-Bildpunkte 34, die das Beleuchtungsmuster des Objekts 26 zeigen. Solange sich diese Objekt-Bildpunkte 34 an derselben Stelle des Bildgebers 28 befinden, befindet sich das zu überwachende Objekt 26 an derselben Stelle in dem überwachten Raumbereich.

Die Empfangseinheit 14 bildet einen Sichtbereich auf dem Bildgeber 28 ab, dessen obere und untere Sichtwinkelbegrenzung 26 in Figur 1 a gestrichelt eingezeichnet ist. Dieser Sichtwinkel erfasst nicht nur den zu überwachenden Raumbereich, in welchem sich das Objekt 26 befindet, sondern auch den Flächenbereich der Frontscheibe 16, an welchem die Beleuchtungsstrahlen 24 durch die Frontscheibe 16 durchtreten. Die Beleuchtungsstrahlen 24 treffen auf die Frontscheibe 16 in einer zur Frontscheibe 16 im wesentlichen senkrechten Ebene auf. Auf Grund der versetzten Anordnung von Empfangseinheit 14 und Sendeeinheit 12 ist die Empfangsebene der Empfangseinheit 14 gegenüber dieser Ebene der Beleuchtungsstrahlen 24 geneigt, wie Figur 1 a zeigt. Direkt an der Frontscheibe 16 reflektiertes Licht der Beleuchtungsstrahlen 24 gelangt daher nicht in die Empfangseinheit 14.

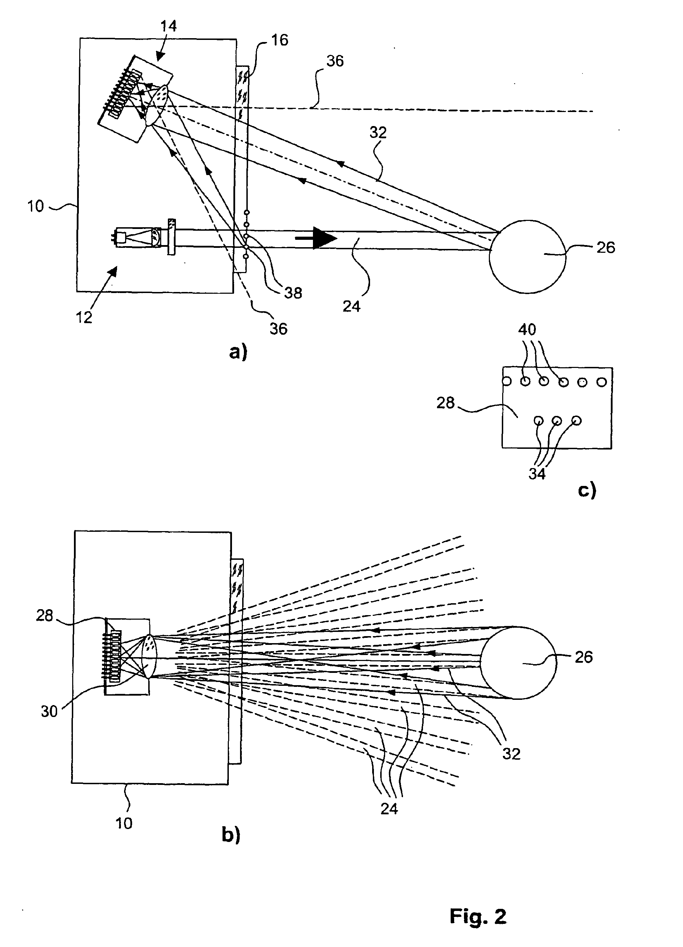

Lagert sich an der Frontscheibe 16 Verschmutzung ab, so wird hierdurch die Intensität der durch die Frontscheibe 16 austretenden Beleuchtungsstrahlen 24 geschwächt, was zu Fehlern in der Überwachung des Objektes 26 führen kann. Figur 2 zeigt die Auswirkungen einer solchen Verschmutzung 38.

Treffen die Beleuchtungsstrahlen 24 auf die an der Frontscheibe 16 abgelagerte Verschmutzung 38, so wird das Licht der Beleuchtungsstrahlen 24 an den Verschmutzungspartikeln diffus gestreut. Diese diffuse Streuung erzeugt helle Beleuchtungspunkte auf der Frontscheibe 16, die die Empfangseinheit 14 auf den Bildgeber 28 abbildet. Da die Auftreffstelle der Beleuchtungsstrahlen 24 auf die Frontscheibe 16 für die Empfangseinheit 14 unter einem anderen Sichtwinkel liegt als das zu überwachende Objekt 26 sind die Verschmutzungs-Bildpunkte 40 auf dem Bildgeber 28 gegenüber den Objekt-Bildpunkten 34 versetzt, wie Figur 1c zeigt. Entsprechend den aufgefächerten Beleuchtungsstrahlen 24 ergibt sich eine lineare Reihe von Verschmutzungs-Bildpunkten 40, die entsprechend dem unterschiedlichen Sichtwinkel parallel gegen die lineare Reihe der Objekt-Bildpunkte 34 versetzt ist. Das Auftreten und die Intensität der Verschmutzungs-Bildpunkte 40 ist ein Hinweis und ein Maß für die Verschmutzung der Frontscheibe 16.

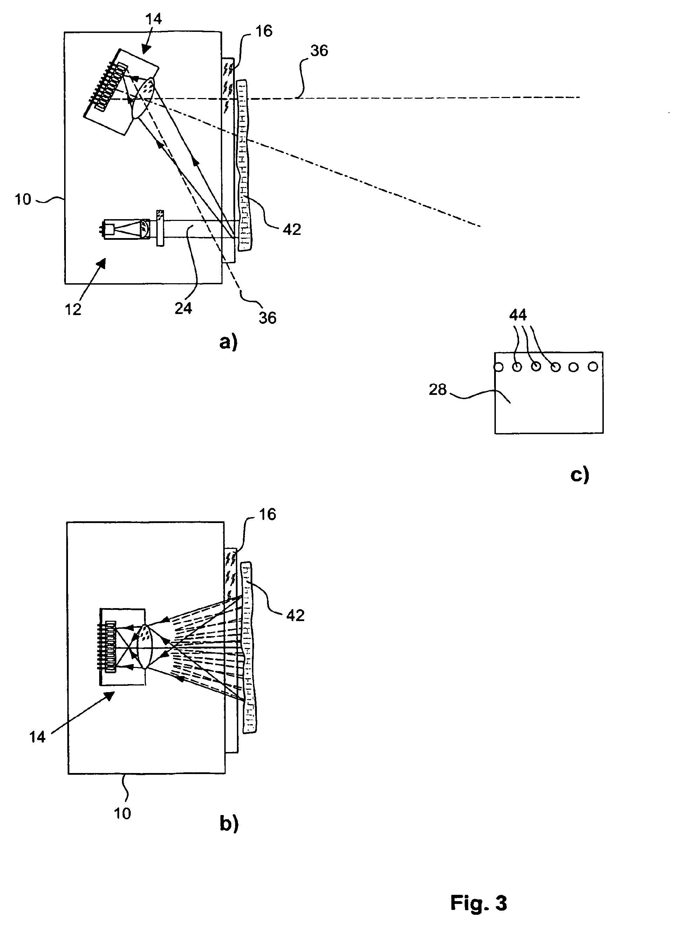

Eine Störung der Funktion der Überwachung kann sich nicht nur durch Verschmutzung der Frontscheibe 16 ergeben, sondern auch durch eine vorsätzliche Manipulation. Hierzu wird eine Abdeckung 42 vor die Vorrichtung gebracht, um den Lichtweg zwischen der Vorrichtung und dem zu überwachenden Objekt 26 zu unterbrechen. In Figur 3 ist eine solche Manipulation durch eine Abdeckung 42 gezeigt, die vor die Frontscheibe 16 gebracht ist.

Bei einer solchen Manipulation wird der Lichtweg der Beleuchtungsstrahlen 24 zu dem Objekt 26 unterbrochen, so dass das Objekt 26 nicht beleuchtet wird und der Bildgeber 28 keine Objekt-Bildpunkte 34 zeigt.

Die Beleuchtungsstrahlen 24 treffen jedoch auf die Abdeckung 42 und werden dort diffus gestreut, so dass die Auftreffstellen der Beleuchtungsstrahlen 24 auf die Abdeckung 42 auf dem Bildgeber 28 als Manipulations-Bildpunkte 44 abgebildet werden. Wird die Abdeckung 42 unmittelbar auf die Frontscheibe 16 gebracht, so entsprechen die Manipulations-Bildpunkte 44 den Verschmutzungs-Bildpunkten 40. Ist die Abdeckung 42 in einem Abstand von der Frontscheibe 16 angeordnet, so ändert sich der Sichtwinkel und die Aufspreizung der Beleuchtungsstrahlen 24, so dass die Linie der Manipulations-Bildpunkte 44 nach unten wandert und sich der Abstand der einzelnen Manipulations-Bildpunkte 44 vergrößert. Das Auftreten von Bildpunkten 44 bei gleichzeitigem Verschwinden der Objekt-Bildpunkte 34 ist somit ein Hinweis auf einen Manipulationsversuch.

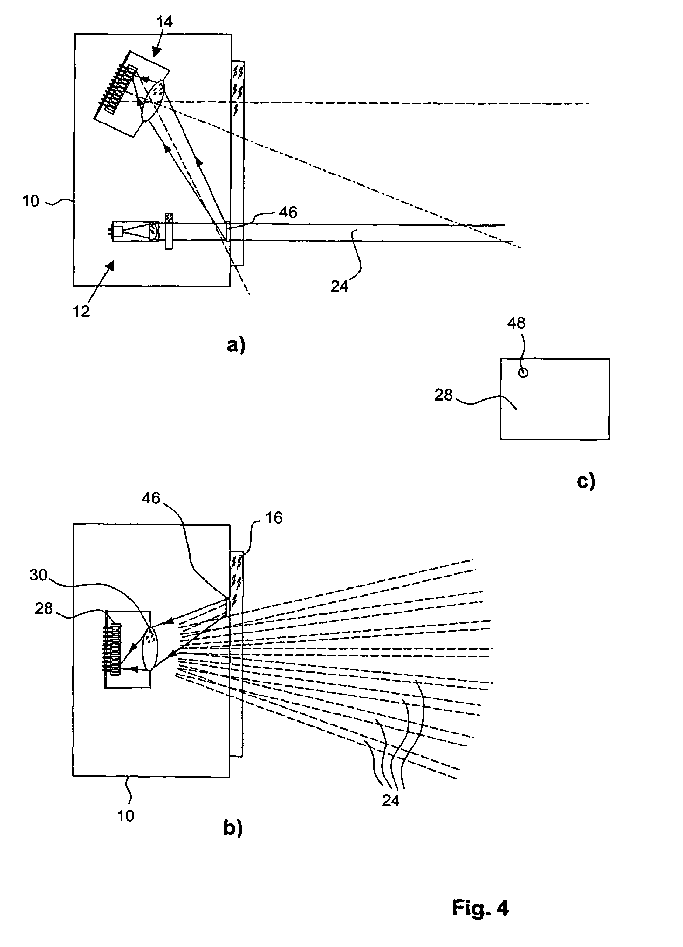

In Figur 4 ist eine Weiterbildung der Vorrichtung gezeigt, die eine kontinuierliche Kontrolle der Funktionsfähigkeit der Vorrichtung ermöglicht.

Hierzu ist die an sich vollständig lichtdurchlässige Frontscheibe 16 in einem Bereich 46 diffus streuend ausgebildet, der von einem Beleuchtungsstrahl 24 getroffen wird, welcher nicht für die Beleuchtung des Objektes 26 verwendet wird. Der Bereich 46 kann beispielsweise oberflächlich mattiert sein. Dieser diffus aufstreuende Bereich 46 entspricht somit einer definierten ständigen punktförmigen Verschmutzung der Frontscheibe 16. Der Bereich 46 wird dementsprechend als Bildpunkt 48 auf dem Bildgeber 28 abgebildet in einer Position, die in der Linie der Verschmutzungs-Bildpunkte 40 liegt.

Die Überwachung des Bildpunktes 48 des diffus streuenden Bereiches 46 ermöglicht die Kontrolle der Funktion der Sendeeinheit 12 und der Empfangseinheit 14. Solange der Bildpunkt 48 mit konstanter Intensität erscheint und ein konstantes Signal der Empfangseinheit 14 erzeugt, arbeiten die Sendeeinheit 12 und die Empfangseinheit 14 einwandfrei. Durch die Position des Bildpunktes 48 auf dem Bildgeber 28 lässt sich außerdem auch kontrollieren, ob die Sendeeinheit 12, die Empfangseinheit 14 und die Frontscheibe 16 in dem Gehäuse 10 in korrekter gegenseitiger Zuordnung montiert sind. Schließlich kann durch die Überwachung des Bildpunktes 48 sichergestellt werden, dass die Sendeeinheit 12 eingeschaltet wird, um die Überwachung in Betrieb zu setzen.

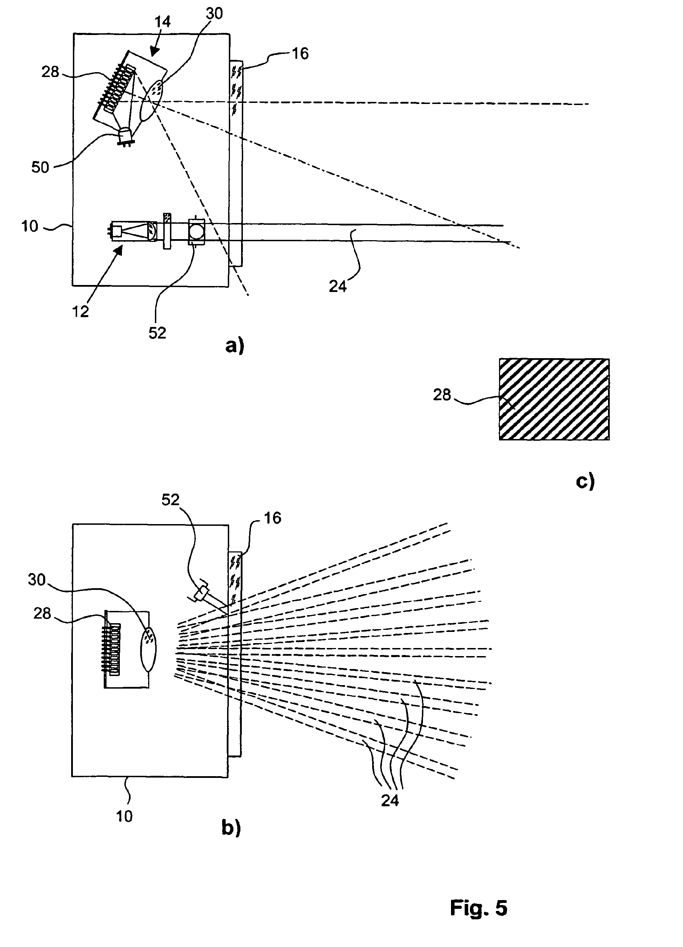

Um eine noch weitere Fehlersicherheit zu erzielen, kann in einer Weiterbildung der Vorrichtung auch die Funktion jedes einzelnen Pixels des Bildgebers 28 überprüft werden. Hierzu wird, wie Figur 5 zeigt, eine zusätzliche Blendungslichtquelle 50, z. B. eine Leuchtdiode verwendet. Mit dieser Blendungslichtquelle 50 wird der gesamte Bildgeber 28 vollständig ausgeleuchtet, wie Figur 5c zeigt. Liefert dabei jedes Pixel bzw. jede Pixel-Gruppe ein ausreichendes Signal, so zeigt dies auch die Funktionsfähigkeit des Bildgebers 28 und der Empfangseinheit 14 im Detail an. Da bei dieser vollständigen Ausleuchtung selbstverständlich keine andere Abbildung mehr möglich ist, kann diese Überprüfung des Bildgebers 28 nur als Test durchgeführt werden, wenn die Vorrichtung nicht in Betrieb ist. Eine solche Überwachung kann dabei selbstverständlich auch automatisch in vorgegebenen Zeitintervallen erfolgen.

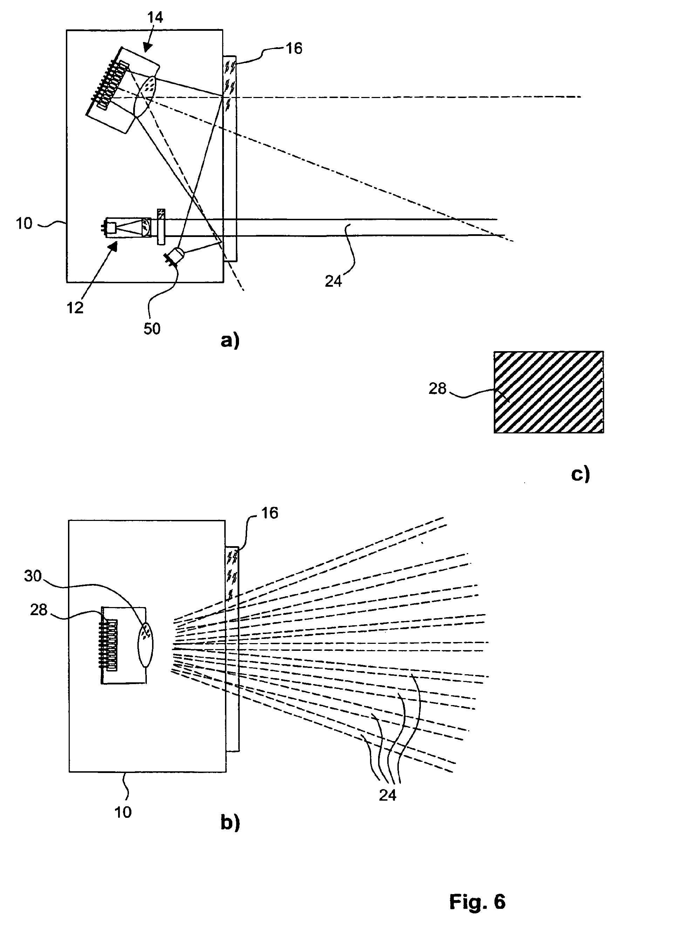

In dem Ausführungsbeispiel der Figur 5 bestrahlt die Blendungslichtquelle 50 den Bildgeber 28 direkt. In dem Ausführungsbeispiel der Figur 6 bestrahlt die Blendungslichtquelle 50 die Frontscheibe 16, so dass der Bildgeber 28 von dem reflektierten Licht der Blendungslichtquelle 50 ausgeleuchtet wird. Die Ausbildung der Figur 6 kann gegebenenfalls auf Grund der Platzverhältnisse und Einbaubedingungen in dem Gehäuse 10 vorteilhaft sein.

In der Ausführung der Figuren 1 bis 4 wird der für die Objektüberwachung mit strukturierter Beleuchtung verwendete Bildgeber 28 auch zur Abbildung und Auswertung der Verschmutzungs-Bildpunkte 40, der Manipulations-Bildpunkte 44 und des Funktions-Kontroll-Bildpunktes 48 verwendet. Es ist ohne weiteres ersichtlich, dass die Überwachung auf Verschmutzung, Manipulation oder Funktionsstörungen nicht notwendig mittels desselben Bildgebers 28 erfolgen muss, mit welchem die Objekt-Bildpunkte 34 erfasst werden. Es kann hierzu ein zusätzliches separates Empfangselement verwendet werden. Dieses Empfangselement übernimmt dann die Funktion des Bereichs des Bildgebers 28, der die Verschmutzungs-Bildpunkte 40, die Manipulations-Bildpunkte 44 bzw. den Kontroll-Bildpunkt 48 auswertet.

Ist ein separates Empfangselement vorgesehen, so kann dieses das Streulicht der Beleuchtungsstrahlen 24 empfangen und auswerten, welches von diffuser Streuung durch Verschmutzung der Frontscheibe 16 oder durch diffuse Streuung einer Manipulations-Abdeckung 42 erzeugt wird. Ebenso kann die diffuse Streuung des Lichtes einer separaten Lichtquelle an Verschmutzungen der Frontscheibe oder einer Abdeckung durch das separate Empfangselement empfangen und ausgewertet werden. Dies ist insbesondere dann möglich, wenn eine solche separate Lichtquelle als Blendungslichtquelle 50 vorgesehen ist.

Ein separates Empfangselement kann auch so angeordnet und eingesetzt werden, dass es direkt reflektiertes Licht der Sendeeinheit empfängt, wie dies in Figur 5 mit dem Empfangselement 52 dargestellt ist. Ein direkt reflektierter Beleuchtungsstrahl 24 trifft auf das Empfangselement 52. Dabei ergibt sich eine zweifache Überwachungsmöglichkeit. Trifft auf das Empfangselement 52 das Licht eines direkt an der Frontscheibe 16 reflektierten Strahls der Sendeeinheit mit gleichbleibender Intensität auf, so bedeutet dies, dass die Sendeeinheit 12 ordnungsgemäß arbeitet und die Frontscheibe 16 nicht verschmutzt oder manipuliert ist. Bei einer Verschmutzung der Frontscheibe 16 oder einer Manipulation trifft in das Empfangselement 52 zusätzlich zu der direkt reflektierten Strahlung noch diffuses Streulicht auf. Die in dem Empfangselement 52 registrierte Lichtintensität nimmt daher zu. Treten dagegen Fehler in der Sendeeinheit 12 auf, so nimmt deren Lichtintensität und damit die Intensität des direkt in das Empfangselement 52 reflektierten Lichtes ab. Eine Zunahme des Signals des Empfangselements 52 weist somit auf eine Verschmutzung oder Manipulation hin, während eine Abnahme des Signals des Empfangselements 52 auf einen Fehler der Sendeeinheit 12 hinweist.

### Bezugszeichenliste

- 10: Gehäuse
- 12: Sendeeinheit
- 14: Empfangseinheit
- 16: Frontscheibe
- 18: Lichtquelle
- 20: Strahlbündelung
- 22: diffraktives optisches Element
- 24: Beleuchtungsstrahlen
- 26: Objekt
- 28: Bildgeber
- 30: Empfangsoptik
- 32: Objektlicht
- 34: Objekt-Bildpunkte
- 36: Sichtwinkelbegrenzung
- 38: Verschmutzung
- 40: Verschmutzungs-Bildpunkte
- 42: Abdeckung
- 44: Manipulations-Bildpunkte
- 46: streuender Bereich
- 48: Bildpunkt zu 46
- 50: Blendungslichtquelle
- 52: Empfangselement

## Patentansprüche

1. Vorrichtung zur optoelektronischen Überwachung von Objekten, mit einer Sendeeinheit (12), die Beleuchtungsstrahlen (24) in einem strukturierten Beleuchtungsmuster aussendet, mit einer Empfangseinheit (14), die einen Bildgeber (28) aufweist, auf welchen das mit dem strukturierten Beleuchtungsmuster beleuchtete Objekt (26) abgebildet wird, und mit einem Gehäuse (10), in welchem die Sendeeinheit (12) und die Empfangseinheit (14) angeordnet sind,
**dadurch gekennzeichnet, dass** das Gehäuse (10) eine Frontscheibe (16) für die Sendeeinheit (12) und die Empfangseinheit (14) aufweist, dass die Sendeeinheit (12), die Empfangseinheit (14) und Frontscheibe (16) in dem Gehäuse (10) so angeordnet sind, dass direkt an der Frontscheibe (16) reflektierte Beleuchtungsstrahlen (24) nicht in den Bildgeber (28) der Empfangseinheit (14) gelangen, dass diffus an der Frontscheibe (16) gestreute Strahlen der Sendeeinheit (12) von der Abbildung des Objektes (26) getrennt in der Empfangseinheit (14) detektiert werden und dass die Sendeeinheit (12) eine Lichtquelle (18), eine Strahlbündelung (20) und ein diffraktives optisches Element (22) zur Erzeugung der Beleuchtungsstrahlen (24) aufweist.

2. Vorrichtung nach Anspruch 1,
**dadurch gekennzeichnet, dass** die Beleuchtungsstrahlen (24) in einer Abtastebene fächerförmig aufgespreizte Einzelstrahlen sind und dass die Empfangseinheit (14) das Objekt (26) unter einem gegen diese Abtastebene geneigten Sichtwinkel beobachtet.

3. Vorrichtung nach einem der vorhergehenden Ansprüche,
**dadurch gekennzeichnet, dass** der Bildgeber (28) eine Matrixanordnung von fotoelektrischen Elementen aufweist.

4. Vorrichtung nach Anspruch 3,
**dadurch gekennzeichnet, dass** diffus an der Frontscheibe (16) gestreute Beleuchtungsstrahlen (24) auf dem Bildgeber (28) von der Abbildung des Objektes (26) getrennt abgebildet werden.

5. Vorrichtung nach Anspruch 4,
**dadurch gekennzeichnet, dass** die Frontscheibe (16) einen diffus streuend ausgebildeten Bereich (46) aufweist, dessen Abbildung (48)auf dem Bildgeber (28) zur Funktionsüberwachung verwendet wird.

6. Vorrichtung nach einem der vorhergehenden Ansprüche,
**dadurch gekennzeichnet, dass** die Empfangseinheit ein zusätzliches von dem Bildgeber (28) getrenntes Empfangselement (52) aufweist.

7. Vorrichtung nach Anspruch 6,
**dadurch gekennzeichnet, dass** das Empfangselement diffus an der Frontscheibe (16) gestreute Strahlen der Sendeeinheit (12) empfängt.

8. Vorrichtung nach Anspruch 6,
**dadurch gekennzeichnet, dass** das Empfangselement (52) direkt an der Frontscheibe (16) reflektierte Strahlen der Sendeeinheit (12) empfängt.

9. Vorrichtung nach Anspruch 3,
**dadurch gekennzeichnet, dass** eine Blendungslichtquelle (50) vorgesehen ist, die den Bildgeber (28) zur Funktionskontrolle vollständig ausleuchtet.

## Claims

1. Device for optoelectronic monitoring of objects, with a transmitter unit (12) that transmits illumination beams (24) in a structured illumination pattern, with a receiver unit (14) that has an image recorder (28) on which is depicted the object (26) that is illuminated with the structured illumination pattern, and with a housing (10) in which the transmitter unit (12) and the receiver unit (14) are arranged,
**characterised in that**
the housing (10) has a faceplate (16) for the transmitter unit (12) and the receiver unit (14); that the transmitter unit (12), the receiver unit (14) and faceplate (16) are arranged in the housing (10) such that illumination beams (24) reflected directly on the faceplate (16) do not reach the image recorder (28) of the receiver unit (14); that beams from the transmitter unit (12) that are diffusely scattered on the faceplate (16) are detected in the receiver unit (14) separately from the depiction of the object (26); and that the transmitter unit (12) has a light source (18), a beam collimator (20) and a diffractive optical element (22) to produce the illumination beams (24).

2. Device according to claim 1, **characterised in that** the illumination beams (24) are individual beams spread in a fan-like manner in a scanning plane and that the receiver unit (14) observes the object (26) at a viewing angle that is inclined in relation to this scanning plane.

3. Device according to one of the preceding claims, **characterised in that** the image recorder (28) has a matrix arrangement of photoelectric elements.

4. Device according to claim 3, **characterised in that** illumination beams (24) scattered diffusely on the faceplate (16) are depicted on the image recorder (28) separately from the depiction of the object (26).

5. Device according to claim 4, **characterised in that** the faceplate (16) has an area (46) that is designed to scatter diffusely, whose depiction (48) on the image recorder (28) is used for monitoring functionality.

6. Device according to one of the preceding claims, **characterised in that** the receiver unit has an additional receiving element (52) that is separate from the image recorder (28).

7. Device according to claim 6, **characterised in that** the receiving element receives beams from the transmitter unit (12) that are diffusely scattered on the faceplate (16).

8. Device according to claim 6, **characterised in that** the receiving element (52) receives beams from the transmitter unit (12) that are directly reflected on the faceplate (16).

9. Device according to claim 3, **characterised in that** a dazzle light source (50) is provided, which completely illuminates the image recorder (28), for the purpose of checking functionality.

## Revendications

1. Dispositif de surveillance optoélectronique d'objets comprenant une unité d'émission (12) qui émet des rayons d'éclairage (24) selon un motif d'éclairage structuré, une unité de réception (14) comportant un générateur d'image (28) donnant l'image de l'objet (26) éclairé selon le motif d'éclairage structuré et un boîtier (10) logeant l'unité d'émission (12) et l'unité de réception (14),
**caractérisé en ce que**
le boîtier (10) comporte une vitre frontale (16) pour l'unité d'émission (12) et l'unité de réception (14),
l'unité d'émission (12), l'unité de réception (14) et la vitre frontale (16) étant logées dans un boîtier (10) pour que les rayons d'éclairage (24) réfléchis directement par la vitre frontale (16) n'arrivent pas dans le générateur d'image (28) de l'unité de réception (14), et
que les rayons de l'unité d'émission (12), diffractés de manière diffuse par la vitre frontale (16) soient détectés séparément de l'image de l'objet (26) dans l'unité de réception (14), et
l'unité d'émission (12) comporte une source de lumière (18), un regroupement de faisceaux (20) et un élément optique diffracteur (22) pour générer les rayons d'éclairage (24).

2. Dispositif selon la revendication 1,
**caractérisé en ce que**
les rayons d'éclairage (24) sont des rayons isolés, étalés en forme d'éventail dans un plan de détection, et
l'unité de réception (14) observe l'objet (26) sous un angle d'observation incliné par rapport au plan de détection.

3. Dispositif selon les revendications précédentes,
**caractérisé en ce que**
le générateur d'image (28) comporte un dispositif en forme de matrice composée d'éléments photoélectriques.

4. Dispositif selon la revendication 3,
**caractérisé en ce que**
les rayons lumineux (24) diffractés de manière diffuse par la vitre frontale (16) donnent sur le générateur d'image (28) une image distincte de l'image de l'objet (26).

5. Dispositif selon la revendication 4,
**caractérisé en ce que**
la vitre frontale (16) comporte une zone de diffraction diffuse (46) dont l'image (48) est utilisée dans le générateur d'image (28) pour surveiller le fonctionnement.

6. Dispositif selon les revendications précédentes,
**caractérisé en ce que**
l'unité de réception comporte un élément de réception (52), distinct en plus du générateur d'image (28).

7. Dispositif selon la revendication 6,
**caractérisé en ce que**
l'élément de réception reçoit les rayons de l'unité d'émission (12), rayons diffractés de manière diffuse par la vitre frontale (16).

8. Dispositif selon la revendication 6,
**caractérisé en ce que**
l'élément de réception (52) reçoit directement les rayons réfléchis par la vitre frontale (16) de l'unité de réception (12).

9. Dispositif selon la revendication 3,
**caractérisé par**
une source de lumière d'éblouissement (50) qui éclaire complètement le générateur d'image (28) pour en contrôler le fonctionnement.
